# EUROPÄISCHE PATENTANMELDUNG

(11) **EP 4 545 235 A1**
(43) Veröffentlichungstag der Anmeldung: **30.04.2025**
(21) Anmeldenummer: 23205857.8
(22) Anmeldetag: 25.10.2023
(51) Int. Cl.: B23K 9/173, B23K 26/14, B23K 26/348, B23K 26/142

(54) **EINRICHTUNG ZUR ERZEUGUNG EINER LUFTSTRÖMUNG ZUM SCHUTZ DES SCHUTZGLASES EINER LASEROPTIK EINES LASER-HYBRID-SCHWEISSKOPFS SOWIE LASER-HYBRID-SCHWEISSKOPF MIT EINER SOLCHEN EINRICHTUNG**

(71) Anmelder: FRONIUS INTERNATIONAL GmbH, 4643 Pettenbach (AT)
(72) Erfinder: EICHBERGER, Tobias, 4643 Pettenbach (AT); PFLÜGELMEIER, Helmut, 4643 Pettenbach (AT); SCHORN, Markus, 4643 Pettenbach (AT); HIESMAYR, Thomas, 4643 Pettenbach (AT)
(74) Vertreter: SONN Patentanwälte GmbH & Co KG

(57) **Zusammenfassung**

Die Erfindung betrifft eine Einrichtung (1) zur Erzeugung einer Luftströmung zum Schutz des Schutzglases (24) einer Laseroptik (21) eines Laser-Hybrid-Schweißkopfs (20) zur Bearbeitung eines Werkstücks (W), mit einem Zyklon (2) beinhaltend einen rotationssymmetrischen Hohlkörper (3) mit einem zylindrischen Bereich (4) mit einer Zuleitung (5) für ein gasförmiges Medium zur Erzeugung der Luftströmung, welche Zuleitung (5) mit mehreren Einlässen (6) verbunden ist, und mit einem konischen Bereich (7), der in Richtung des zu bearbeitenden Werkstücks (W) verjüngend ausgebildet ist und in einem kreisförmigen Auslass (8) mündet, sowie einen Laser-Hybrid-Schweißkopf (20) mit einer solchen Einrichtung (1). Erfindungsgemäß mündet die Zuleitung (5) für das gasförmige Medium tangential in einem im Wesentlichen kreisförmigen Kanal (9) und sind die Einlässe (6) an der Innenseite des Kanals (9) angeordnet. Dadurch resultiert eine optimale Strömung des gasförmigen Mediums im Zyklon (2) und ein optimaler Schutz des Schutzglases (24).

## Beschreibung

Die Erfindung betrifft eine Einrichtung zur Erzeugung einer Luftströmung zum Schutz des Schutzglases einer Laseroptik eines Laser-Hybrid-Schweißkopfs zur Bearbeitung eines Werkstücks, mit einem Zyklon beinhaltend einen rotationssymmetrischen Hohlkörper mit einem zylindrischen Bereich mit einer Zuleitung für ein gasförmiges Medium zur Erzeugung der Luftströmung, welche Zuleitung mit mehreren Einlässen verbunden ist, und mit einem konischen Bereich, der in Richtung des zu bearbeitenden Werkstücks verjüngend ausgebildet ist und in einem kreisförmigen Auslass mündet.

Weiters betrifft die Erfindung einen Laser-Hybrid-Schweißkopf, mit einer Laseroptik mit einer Fokussierlinse zum Fokussieren eines Laserstrahls und einem Schutzglas zum Schutz der Fokussierlinse sowie mit einer Lichtbogenschweißeinheit mit einem Lichtbogenschweißbrenner mit einem abschmelzbaren Schweißdraht.

Laser-Hybrid-Schweißköpfe kombinieren einen Laserschweißprozess mit einem Lichtbogenschweißprozess, meist mit einem Metallschutzgas (MSG)-Schweißprozess. Dabei werden die Vorteile beider Prozesse, die hohe Schweißgeschwindigkeit, konzentrierte Energie, hohe Festigkeit und geringe thermische Belastung des Laserschweißprozesses mit der kostengünstigen Energieeinbringung, guten Spaltüberbrückbarkeit und der Möglichkeit der Zugabe von Zusatzwerkstoffen des Lichtbogen-Schweißprozesses optimal kombiniert. Laser-Hybrid-Schweißprozesse zeichnen sich durch hohe Schweißgeschwindigkeit beim Fügen von Dünnblechen oder maximalen Einbrand bei dickeren Materialien aus. Das Laser-Hybrid-Schweißverfahren eignet sich besonders für die automatisierte Serienproduktion im Dünnblechbereich bis ca. 3 mm, als auch zum Schweißen langer Bleche in der Automobilindustrie und für den Schiffbau bis ca. 10 mm Dicke. Abhängig von der Materialdicke kann eine Schweißgeschwindigkeit von bis zu 7 m/min erreicht werden.

Beispielsweise beschreibt die EP 1 750 893 B1 einen Laser-Hybrid-Schweißkopf zum Schweißen von beschichteten Blechen.

Der Laser-Hybrid-Schweißkopf weist üblicherweise eine entsprechende Aufnahme zur Anbindung an einem handelsüblichen Industrieroboter auf. Eine Fokussierlinse des Laseroptik wird dabei zur Bündelung des Laserstrahls verwendet. Am unteren Ende der Fokussierlinse befindet sich üblicherweise ein Schutzglas, welches die Fokussierlinse vor Verschmutzung durch Spritzer und Schweißrauch schützt. Einzelne Schweißspritzer und verbleibender Schweißrauch kann zum Schutzglas gelangen und dort anhaften. Durch die Verschmutzungen wird vom Schutzglas ein Teil der Laserstrahlung absorbiert, wodurch es sich erwärmt, und im Extremfall zerstört werden kann. Zum Schutz des Schutzglases der Laseroptik gibt es verschiedene Konzepte, welche im Wesentlichen eine Luftströmung oder einen Unterdruck am Schutzglas erzeugen, wodurch die Wahrscheinlichkeit, dass Schweißspritzer oder Rauchpartikel zur Oberfläche des Schutzglases gelangen, reduziert wird und das Schutzglas sauber gehalten wird.

Über eine Querstromdüse (Cross-Jet) wird unterhalb des Schutzglases der Laseroptik eine Luftströmung in Querrichtung zum Laserstrahl erzeugt und die Luft und allfällige Schmutz- oder Rauchpartikel von einer gegenüber der Düse angeordnete Absaugeinrichtung abgesaugt. Eine eigene Querluftströmung kann auch direkt an der Oberfläche des Schutzglases eingesetzt werden.

Bei der Radialluftströmung strömt Luft über zwei konzentrisch angeordnete, ringförmige Einlässe auf das Schutzglas der Laseroptik. Auf der Oberfläche des Schutzglases kehrt sich die Richtung der Luftströmung um und wird von einer allenfalls vorgesehenen Querluftströmung eines Cross-Jets abgesaugt. Die Strömungsgeschwindigkeit des Cross-Jets ist um ein Vielfaches höher als die Schutzglasströmung.

Beispielsweise beschreibt die DE 20 2005 008 564 U1 eine Vorrichtung zur Erhöhung der Standzeit einer Laseroptik, wobei zwischen dem Schutzglas und einem Cross-Jet eine Vorrichtung zur Erzeugung einer Strömung mit einem gasförmigen Medium vorgesehen ist, welche in Richtung Schutzglas fliegende Spritzer oder Schweißrauch entsprechend ablenkt.

Andere Schutzeinrichtungen erzeugen in Art eines Zyklons eine Drallströmung in Richtung des zu bearbeitenden Werkstücks. Beispielsweise beschreibt die EP 0 732 169 A1 eine solche Vorrichtung zum Schutz der Optik oder des davor angeordneten Schutzglases vor Verschmutzung.

Eine Einrichtung zur Erzeugung einer Luftströmung zum Schutz des Schutzglases einer Laseroptik der gegenständlichen Art ist auch aus der JP 2007-216290 A bekannt geworden.

Trotz derartiger Maßnahmen ist es insbesondere bei größeren Laserleistungen von Zeit zu Zeit erforderlich, das Schutzglas auszuwechseln. Dabei wird das Schutzglas in der Regel durch ein Neues ersetzt. Eine Reinigung bzw. Aufbereitung eines gebrauchten Schutzglases ist jedoch auch denkbar, insbesondere wenn das Schutzglas nur durch Schweißrauch verschmutzt wurde. Mit steigenden Laserleistungen nimmt die Entstehung von Schweißrauch und Spritzern zu, wodurch das Schutzglas häufiger ausgewechselt werden muss und die Produktivität sinkt. Darüber hinaus sorgt auch eine Wechselwirkung zwischen der Luftströmung, welche zum Schutz des Schutzglases eingesetzt wird und der starken Sogwirkung des Cross-Jets zu unerwünschten Verwirbelungen oberhalb und unterhalb des Cross-Jets und somit zu einer schlechteren Schutzwirkung für das Schutzglas der Laseroptik. Verwirbelungen können zu Rückströmungen in Richtung Schutzglas führen, weshalb sie zu vermeiden sind.

Die Aufgabe der vorliegenden Erfindung besteht daher in der Schaffung einer Einrichtung zur Erzeugung einer Luftströmung zum Schutz des Schutzglases einer Laseroptik eines Laser-Hybrid-Schweißkopfs zur Bearbeitung eines Werkstücks, insbesondere mit höherer Leistung, und in der Schaffung eines entsprechenden Laser-Hybrid-Schweißkopfs, welche eine möglichst hohe Standzeit aufweisen und bei welchen die Wartungsintervalle zum Tausch des Schutzglases der Laseroptik verlängert werden können. Der Aufwand und die Kosten für die erfindungsgemäße Einrichtung sollen nicht zu hoch sein. Nachteile bekannter Vorrichtungen und Verfahren sollen vermieden oder zumindest reduziert werden.

Gelöst wird die erfindungsgemäße Aufgabe durch eine oben genannte Einrichtung zur Erzeugung einer Luftströmung zum Schutz des Schutzglases einer Laseroptik eines Laser-Hybrid-Schweißkopfs zur Bearbeitung eines Werkstücks, bei der die Zuleitung für das gasförmige Medium tangential in einem im Wesentlichen kreisförmigen Kanal mündet und die Einlässe an der Innenseite des Kanals angeordnet sind. Durch die spezielle Einbringung des gasförmigen Mediums in den Zyklon wird eine optimale Luftströmung erzielt, welche Partikel in radialer Richtung nach außen abführt. Im Gegensatz zu axial und radial gerichteten Luftströmungen, welche zu instationärem Verhalten neigen, resultiert bei der erfindungsgemäßen Einrichtung durch die über den Umfang des Zyklon gleichmäßige Einströmung des gasförmigen Mediums eine gleichmäßige Druckverteilung und eine hohe Stabilität. Auch wenn der konstruktive Aufwand insbesondere im Bereich der Einströmung des gasförmigen Mediums an der oberen Seite des rotationssymmetrischen Hohlkörpers des Zyklons etwas höher ist, kann die Einrichtung bei entsprechenden Herstellungsmethoden relativ einfach und kostengünstig hergestellt werden. Im Gegensatz zu herkömmlichen Einrichtungen zum Schutz des Schutzglases vor Verunreinigungen kann bei der vorliegenden Einrichtung ein proportionaler Zusammenhang zwischen Menge an gasförmigem Medium bzw. Luft und Reinigungswirkung beobachtet werden.

Der im Wesentlichen kreisförmige Kanal weist gemäß einer Ausführungsvariante im Wesentlichen konstanten Querschnitt auf.

Alternativ dazu kann der im Wesentlichen kreisförmige Kanal von der Mündung der Zuleitung weg verjüngenden Querschnitt aufweisen. Dadurch kann eine noch gleichmäßigere Einströmung des gasförmigen Mediums erzielt werden.

Die Einlässe können in konstanten Winkelabständen zueinander angeordnet sein. Diese regelmäßige Aufteilung der Einlässe eignet sich insbesondere dann, wenn der Kanal verjüngend ausgebildet ist.

Gemäß einem weiteren Merkmal der Erfindung können die Einlässe auch in von der Mündung der Zuleitung weg größer werdenden Winkelabständen zueinander angeordnet sein. Durch diese Maßnahme zusammen mit der Gestaltung des Querschnitts des Kanals und der Gestaltung der Einlässe kann eine besonders gleichmäßige Einströmung des gasförmigen Mediums in den Zyklon erzielt werden.

Wenn die Einlässe durch Leitschaufeln voneinander getrennt sind, kann die Luftströmung zu den Einlässen noch weiter verbessert bzw. unterstützt werden.

Je nach Ausführung des im Wesentlichen kreisförmigen Kanals und den Winkelabständen zwischen den Einlässen können die Leitschaufeln zwischen den Einlässen identisch oder auch mit unterschiedlicher Außenkontur ausgebildet sein. Alle diese Merkmale tragen zu einer optimalen gleichmäßigen Verteilung der Luftströmung innerhalb des rotationssymmetrischen Hohlkörpers des Zyklon bei.

Gemäß einem weiteren Merkmal der Erfindung weisen die Leitschaufeln eine Außenkontur in Form eines Tragflächenprofils auf. Dadurch strömt das gasförmige Medium optimal über die Flächen der Tragflügelform in die jeweiligen Einlässe in den rotationssymmetrischen Hohlkörper des Zyklon.

Vorteilhafterweise sind die Leitschaufeln gewölbt ausgebildet. Dadurch kann das Strömungsprofil weiter optimiert werden.

Wenn die Einlässe trichterförmig aufgeweitet ausgebildet sind, kann ebenfalls das Strömungsprofil beeinflusst werden. Durch asymmetrische Ausbildung der trichterförmigen Aufweitung der Einlässe kann die Richtung der Strömung des gasförmigen Mediums beeinflusst werden.

Im Allgemeinen wird das gasförmige Medium durch Druckluft gebildet, die meist ohnedies vorhanden und billig ist. Für bestimmte Anwendungen ist es aber auch denkbar, bestimmte Gase anstelle von Luft beizumengen oder zu verwenden.

Für eine optimale Verteilung der Strömung über den Umfang des Zyklons sind zumindest acht Einlässe vorgesehen.

Wenn unterhalb des Auslasses des rotationssymmetrischen Hohlkörpers eine an sich bekannte Querstromdüse (Cross-Jet) mit einer gegenüber angeordneten Absaugeinrichtung angeordnet ist, können allenfalls durch den Zyklon abgeschiedene Partikel optimal entfernt werden. Die Querstromdüse kann beispielsweise durch eine Lavall-Düse gebildet sein. Somit gelangen die abgeschiedenen Partikel nicht an die Schweißstelle. Insbesondere bei höheren Laserleistungen ist die Anordnung einer Querstromdüse obligatorisch. Bei geringeren Laserleistungen kann darauf auch verzichtet werden.

Für eine optimale Funktion der erfindungsgemäßen Einrichtung ist ein Abstand zwischen dem Auslass des rotationssymmetrischen Hohlkörpers des Zyklons und der Querstromdüse von vorzugsweise 5 mm bis 80 mm vorgesehen. Dadurch wird eine optimale Wechselwirkung zwischen dem Zyklon und der Querströmung erzielt.

Der rotationssymmetrische Hohlkörper des Zyklons weist üblicherweise eine Höhe zwischen 30 mm und 300 mm auf. Eine gewisse Mindesthöhe ist für eine einwandfreie Funktion des Zyklon notwendig. Der zylindrische Bereich des rotationssymmetrischen Hohlkörpers hat einen Durchmesser zwischen 20 mm und 60 mm. Die Neigung des konischen Bereichs des rotationssymmetrischen Hohlkörpers des Zyklon beträgt idealerweise zwischen 5 ° und 45 °. Der Durchmesser des Auslasses des rotationssymmetrischen Hohlkörpers des Zyklon beträgt zwischen 10 mm und 40 mm.

Gemäß einem weiteren Merkmal der Erfindung ist am Auslass des rotationssymmetrischen Hohlkörpers des Zyklons eine umlaufende Kante, sozusagen eine Abrisskante, vorgesehen. Diese Kante sorgt dafür, dass die vom Cross-Jet angesaugt Luft und der Wirbel gleichgerichtet nach unten in die Öffnung des Cross-Jet strömt.

Dabei weist die umlaufende Kante am Auslass des rotationssymmetrischen Hohlkörpers des Zyklons einen spitzen Winkel kleiner 45° auf. Somit wird durch den spitzen Winkel der Abrisskante eine "scharfe" Kante gebildet.

Der rotationssymmetrische Hohlkörper wird zusammen mit der Zuleitung, dem kreisförmigen Kanal und den Einlässen vorzugsweise in einem 3D-Druckverfahren hergestellt. Dadurch resultieren relativ niedrige Herstellungskosten. Vorteilhafterweise kann die erfindungsgemäße Einrichtung einstückig und ohne komplexe mechanische Elemente hergestellt werden.

Der rotationssymmetrische Hohlkörper zusammen mit der Zuleitung, dem kreisförmigen Kanal und den Einlässen kann aus Metall, insbesondere Aluminium oder einer Aluminium-Legierung, oder auch aus Kunststoff hergestellt sein.

Die Erfindung wird auch durch einen oben genannten Laser-Hybrid-Schweißkopf, mit einer Laseroptik mit einer Fokussierlinse zum Fokussieren eines Laserstrahls und einem Schutzglas zum Schutz der Fokussierlinse sowie mit einer Lichtbogenschweißeinheit mit einem Lichtbogenschweißbrenner, mit einem abschmelzbaren Schweißdraht gelöst, bei dem zum Schutz des Schutzglases der Laseroptik eine oben beschriebene Einrichtung angeordnet ist. Dadurch kann die Standzeit des Laser-Hybrid-Schweißkopfs und somit die Produktivität erhöht werden. Zu den weiteren erzielbaren Vorteilen wird auf die obige Beschreibung der Einrichtung zur Erzeugung einer Luftströmung zum Schutz des Schutzglases der Laseroptik des Laser-Hybrid-Schweißkopfs verwiesen. Die vorliegende Erfindung lässt sich natürlich auch bei reinen Laserschweißköpfen ohne Lichtbogenschweißbrenner anwenden.

Die Erfindung wird anhand der beigefügten Zeichnungen näher erläutert. Darin zeigen:
- Fig. 1: eine schematische Ansicht eines Laser-Hybrid-Schweißkopf gemäß dem Stand der Technik;
- Fig. 2: eine schematische Ansicht eines Laser-Hybrid-Schweißkopf mit der erfindungsgemäßen Einrichtung zur Erzeugung einer Luftströmung zum Schutz des Schutzglases der Laseroptik des Laser-Hybrid-Schweißkopfs;
- Fig. 3: ein schematisches Schnittbild durch eine Ausführungsform einer erfindungsgemäßen Einrichtung zur Erzeugung einer Luftströmung zum Schutz des Schutzglases einer Laseroptik eines Laser-Hybrid-Schweißkopfs;
- Fig. 4: eine perspektivische, teilweise geschnittene Ansicht einer Ausführungsform einer erfindungsgemäßen Einrichtung;
- Fig. 5A und 5B: ein vertikales und horizontales Schnittbild durch eine erste Ausführungsform der erfindungsgemäßen Einrichtung zur Erzeugung einer Luftströmung;
- Fig. 6A und 6B: ein vertikales und horizontales Schnittbild durch eine zweite Ausführungsform der erfindungsgemäßen Einrichtung zur Erzeugung einer Luftströmung; und
- Fig. 7A und 7B: ein vertikales und horizontales Schnittbild durch eine dritte Ausführungsform der erfindungsgemäßen Einrichtung zur Erzeugung einer Luftströmung.

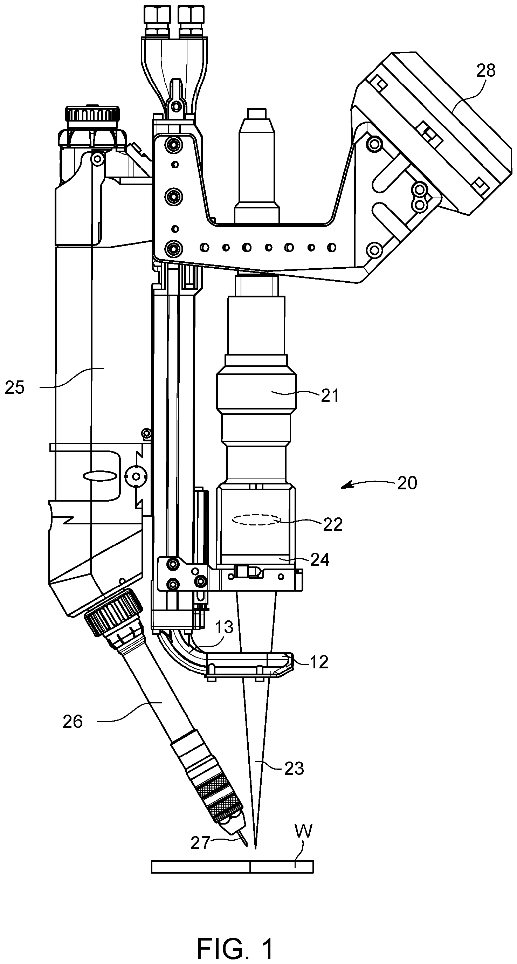

Fig. 1 zeigt eine schematische Ansicht eines Laser-Hybrid-Schweißkopfs 20 gemäß dem Stand der Technik. Der Laser-Hybrid-Schweißkopf 20 kombiniert einen Laserschweißprozess mit einem Lichtbogenschweißprozess. In einer Laseroptik 21 wird der Laserstrahl 23 erzeugt und in einer Fokussierlinse 22 gebündelt. Zum Schutz der Fokussierlinse 22 vor Schweißspritzern und Schweißrauch ist ein Schutzglas 24 vorgesehen. Neben der Laseroptik 21 ist eine Lichtbogenschweißeinheit 25 mit einem Lichtbogenschweißbrenner 26 angeordnet, über den ein abschmelzbarer Schweißdraht 27 zur Schweißstelle auf dem zu bearbeitenden Werkstück W zugeführt wird. Laser-Hybrid-Schweißköpfe 20 zeichnen sich durch hohe Schweißgeschwindigkeit beim Fügen von Dünnblechen oder maximalen Einbrand bei dickeren Materialien aus und eignen sich besonders für die automatisierte Serienproduktion beispielsweise in der Automobilindustrie und beim Schiffsbau.

Dementsprechend weist der Laser-Hybrid-Schweißkopf 20 eine entsprechende Einrichtung 28 zur Befestigung an einem Roboterarm eines Schweißroboters (nicht dargestellt) auf. Zum Schutz des Schutzglases 24 der Laseroptik 21 vor Schweißspritzern oder Schweißrauch kann sich zwischen dem Schutzglas 24 und der Schweißstelle am Werkstück W eine Querstromdüse (Cross-Jet) 12 und eine gegenüberliegende Absaugeinrichtung 13 befinden. Dabei wird eine Luftströmung in einer Richtung quer zum Laserstrahl 23 mit sehr hoher Geschwindigkeit, vorzugsweise Überschallgeschwindigkeit, erzeugt, wodurch Schweißspritzer über die Absaugeinrichtung 13 abgesaugt werden können. Dadurch bleibt die Schweißstelle am Werkstück aber auch die Region zwischen der Querstromdüse 12 und dem Schutzglas 24 der Laseroptik 21 frei von Verunreinigungen und Schweißrauch. Dennoch gelangen insbesondere bei Laser-Hybrid-Schweißköpfe 20 hoher Leistung von Zeit zu Zeit Verunreinigungen an das Schutzglas 24, weshalb dieses in bestimmten Zeitabständen gewechselt werden muss. Ziel ist die Erreichung möglichst langer Wartungsintervalle und möglichst langer Schweißzeiten und somit eine hohe Produktivität.

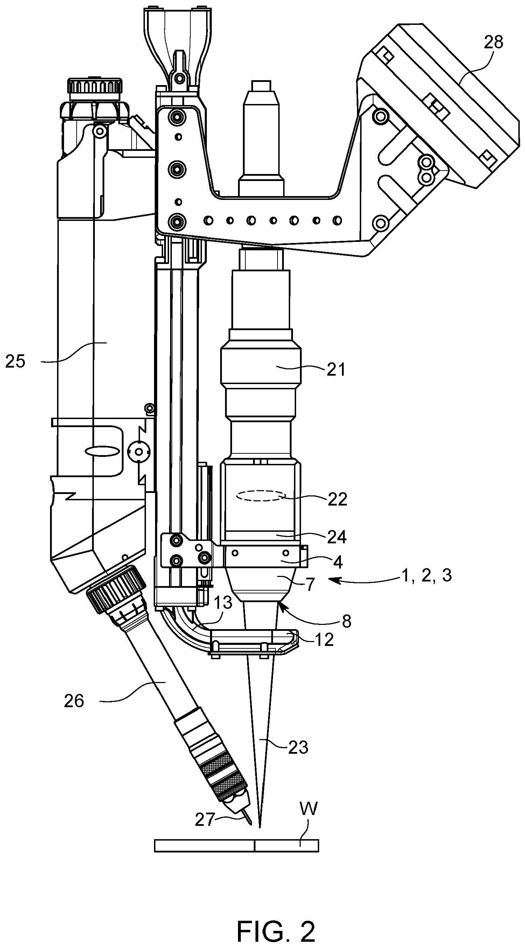

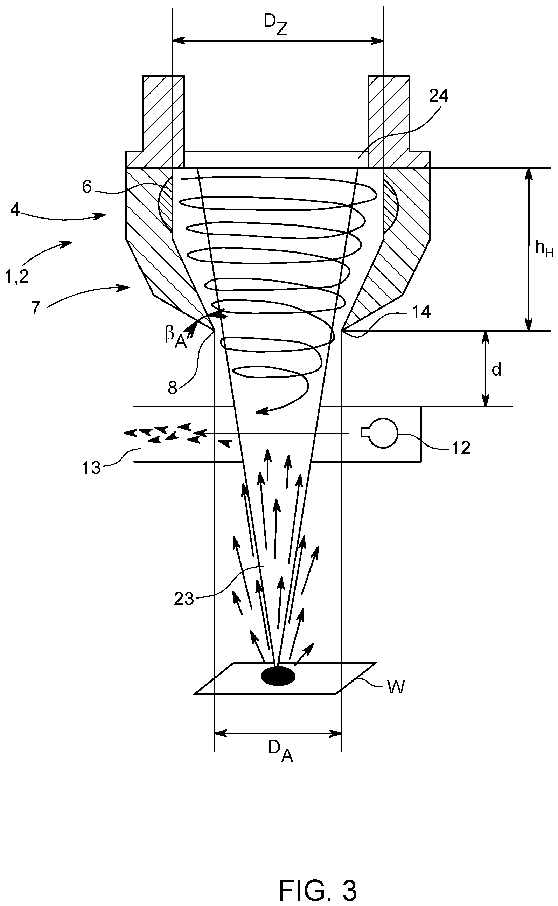

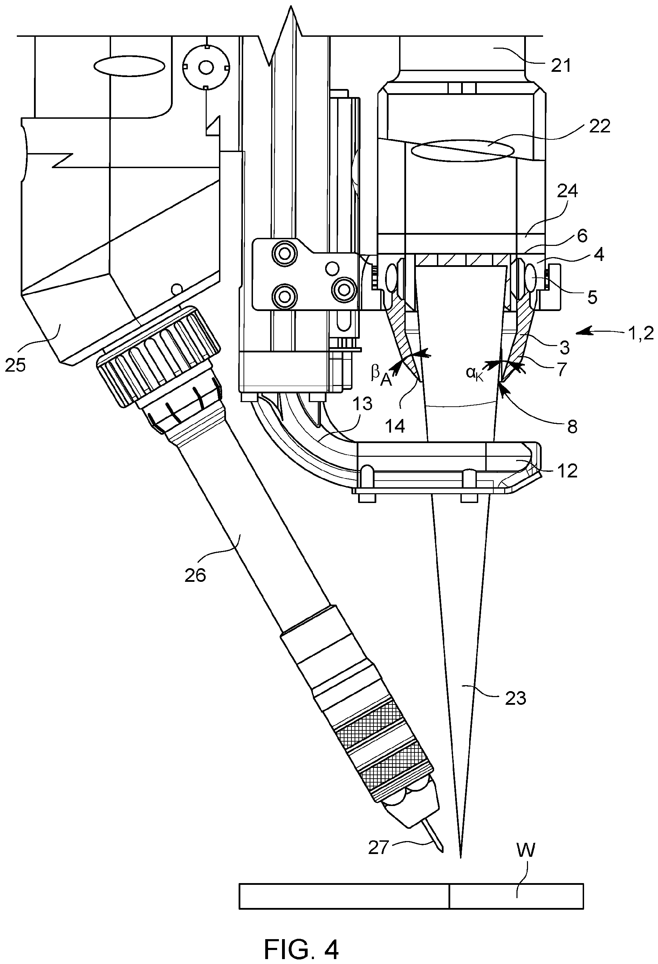

Fig. 2 zeigt eine schematische Ansicht eines Laser-Hybrid-Schweißkopfs 20 mit der erfindungsgemäßen Einrichtung 1 zur Erzeugung einer Luftströmung zum Schutz des Schutzglases 24 der Laseroptik 21 des Laser-Hybrid-Schweißkopfs 20. Die Einrichtung 1 zur Erzeugung einer Luftströmung zum Schutz des Schutzglases 24 der Laseroptik 21 des Laser-Hybrid-Schweißkopfs 20 beinhaltet einen Zyklon 2 (Fliehkraftabscheider) mit einem rotationssymmetrischen Hohlkörper 3 mit einem zylindrischen Bereich 4 mit einer Zuleitung 5 für ein gasförmiges Medium zur Erzeugung der Luftströmung, welche Zuleitung 5 mit mehreren Einlässen 6 verbunden ist, und mit einem konischen Bereich 7, der in Richtung des zu bearbeitenden Werkstücks W verjüngend ausgebildet ist und in einem kreisförmigen Auslass 8 mündet (siehe auch Fig. 3 und 4) .

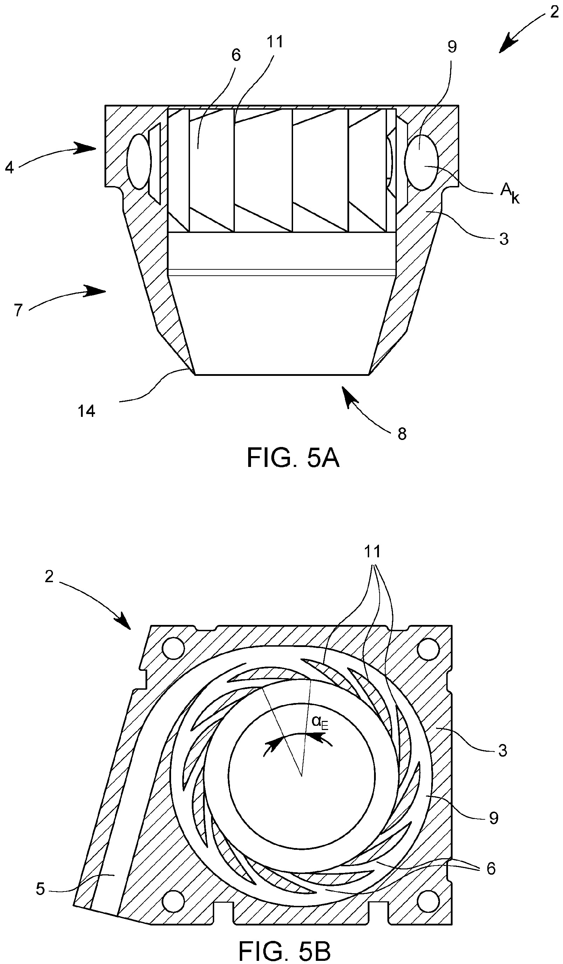

In Fig. 3 ist ein schematisches Schnittbild durch eine Ausführungsform einer erfindungsgemäßen Einrichtung 1 zur Erzeugung einer Luftströmung zum Schutz des Schutzglases 24 einer Laseroptik 21 eines Laser-Hybrid-Schweißkopfs 20 wiedergegeben. Zur Erzielung optimaler Strömungsverhältnisse innerhalb des Zyklons 2 mündet die Zuleitung 5 für das gasförmige Medium tangential in einem im Wesentlichen kreisförmigen Kanal 9 und sind die Einlässe 6 an der Innenseite des Kanals 9 angeordnet. Diese Konstruktion des Einlassbereichs des Zyklon 2 ist anhand der Ausführungsvarianten gemäß den Figuren 5A, 5B, 6A, 6B und 7A und 7B besser ersichtlich.

Fig. 4 zeigt eine perspektivische, teilweise geschnittene Ansicht einer Ausführungsform einer erfindungsgemäßen Einrichtung 1. Der Zyklon 2 beinhaltet einen rotationssymmetrischen Hohlkörper 3 mit einem zylindrischen Bereich 4 mit einer Zuleitung 5 für das gasförmige Medium zur Erzeugung der Luftströmung, welche Zuleitung 5 mit mehreren Einlässen 6 verbunden ist. Nach unten schließt am rotationssymmetrischen Hohlkörper 3 ein in Richtung des zu bearbeitenden Werkstücks W konischer Bereich 7 an, der in einem kreisförmigen Auslass 8 mündet. Durch die Verengung im konischen Bereich 7 des rotationssymmetrischen Hohlkörpers 3 kommt es zu einer Beschleunigung der Luftströmung in axialer Richtung, die dem Eindringen von Verschmutzungen zusätzlich entgegenwirkt. Vorzugsweise sind mehrere, insbesondere mindestens acht Einlässe 6 angeordnet. Der rotationssymmetrische Hohlkörper 3 des Zyklons 2 weist üblicherweise eine Höhe h_{H} zwischen 30 mm und 300 mm auf.

Der zylindrische Bereich 4 des rotationssymmetrischen Hohlkörpers 3 hat einen Durchmesser D_{Z} zwischen 20 mm und 60 mm. Die Neigung α_{K} des konischen Bereichs 7 des rotationssymmetrischen Hohlkörpers 3 des Zyklons 2 beträgt idealerweise zwischen 5 ° und 45 °. Der Durchmesser D_{A} des Auslasses 8 des rotationssymmetrischen Hohlkörpers 3 des Zyklons 2 beträgt zwischen 10 mm und 40 mm. Der Abstand d zwischen dem Auslass 8 und einer Querstromdüse 12 beträgt idealerweise zwischen 5 mm und 80 mm. Am Auslass 8 des rotationssymmetrischen Hohlkörpers 3 des Zyklons 2 ist vorzugsweise eine umlaufende Kante 14 vorzugsweise mit einem spitzen Winkel β_{A} < 45°.

Die Regelung der Luftmenge für den Zyklon 2 und allenfalls die Querstromdüse 12 erfolgt vorzugsweise über entsprechende Ventile, beispielsweise Magnetventile (nicht dargestellt).

Fig. 5A zeigt ein vertikales Schnittbild durch eine erste Ausführungsform der erfindungsgemäßen Einrichtung 1 zur Erzeugung einer Luftströmung. In Fig. 5B ist ein horizontales Schnittbild durch die Einrichtung 1 in Höhe des zylindrischen Bereichs 4 des rotationssymmetrischen Hohlkörpers 3 wiedergegeben. Die Zuleitung 5 für das gasförmige Medium mündet tangential in einem im Wesentlichen kreisförmigen Kanal 9. Bei dieser Ausführungsform weist der Kanal 9 von der Mündung der Zuleitung 5 weg verjüngenden Querschnitt A_{K} auf. Die Einlässe 6 sind durch Leitschaufeln 11 voneinander getrennt, welche eine Außenkontur in Form eines Tragflächenprofils aufweisen und gewölbt ausgebildet sind. Bei dieser Variante sind die Leitschaufeln 11 zwischen den Einlässen 6 mit unterschiedlicher Außenkontur ausgebildet. Die Winkelabstände α_{E} zwischen den Einlässen 6 bzw. Leitschaufeln 11 sind bei dieser Ausführungsform konstant. Wie in Fig. 5A ersichtlich, sind die Einlässe 5 trichterförmig aufgeweitet ausgebildet. Die Konstruktion des Kanals 9 und der Einlässe 6 und dazwischen angeordneten Leitschaufeln 11 ermöglicht eine optimale Druckverteilung über den Umfang des rotationssymmetrischen Hohlkörpers 3 des Zyklon 2. Dadurch werden Verwirbelungen, welche zu Rückströmungen in Richtung Schutzglas 24 der Laseroptik 21 führen könnten, vermieden oder minimiert.

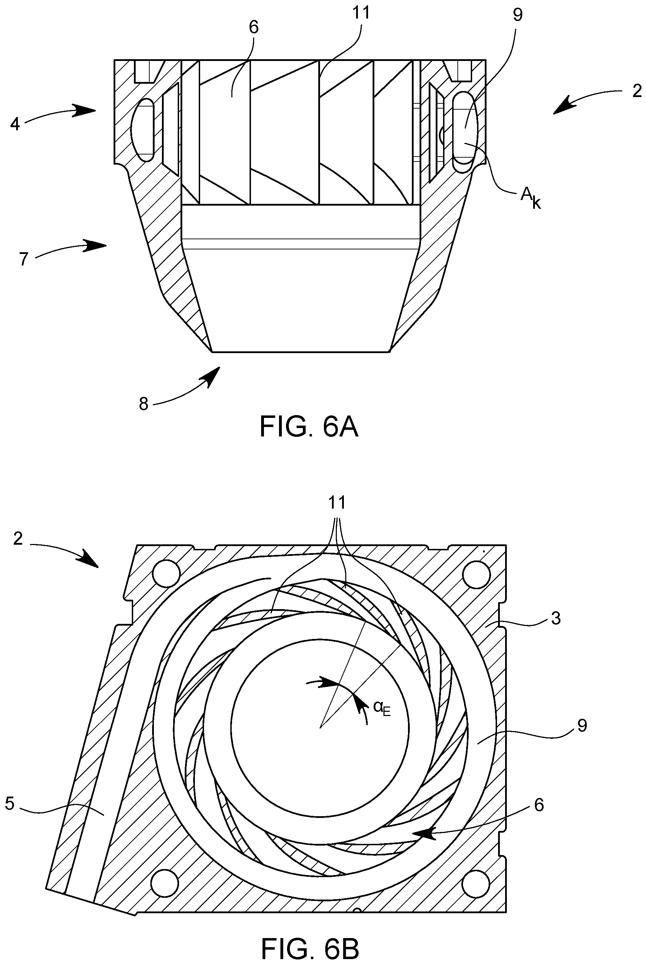

Fig. 6A und 6B zeigen ein vertikales und horizontales Schnittbild durch eine zweite Ausführungsform der erfindungsgemäßen Einrichtung 1 zur Erzeugung einer Luftströmung. Bei dieser Ausführungsform weist der Kanal 9 von der Mündung der Zuleitung 5 weg wieder verjüngenden Querschnitt A_{K} auf. Die Einlässe 6 sind durch Leitschaufeln 11 voneinander getrennt, welche hier identisch, also mit gleicher Außenkontur ausgebildet sind. Die Winkelabstände α_{E} zwischen den Einlässen 6 bzw. Leitschaufeln 11 werden bei dieser Ausführungsform von der Mündung der Zuleitung (5) weg größer.

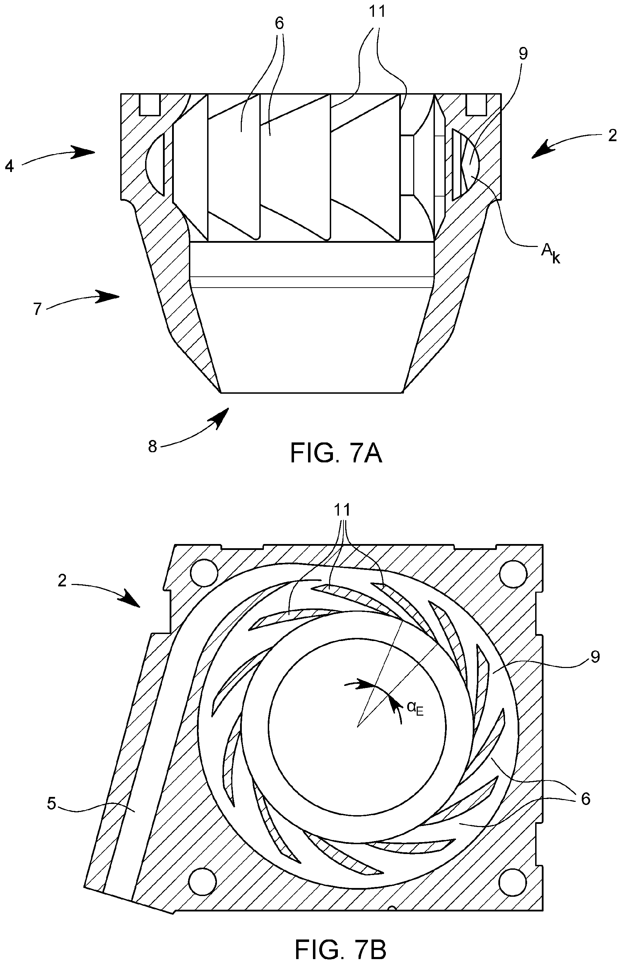

Fig. 7A und 7B ein vertikales und horizontales Schnittbild durch eine dritte Ausführungsform der erfindungsgemäßen Einrichtung 1 zur Erzeugung einer Luftströmung. Bei dieser Ausführungsform weist der Kanal 9 konstanten Querschnitt A_{K} auf. Die Einlässe 6 sind durch Leitschaufeln 11 voneinander getrennt, welche identisch ausgebildet sind. Die Winkelabstände α_{E} zwischen den Einlässen 6 bzw. Leitschaufeln 11 werden von der Mündung der Zuleitung 5 weg größer.

Neben den in den Figuren 5A, 5B, 6A, 6B und 7A und 7B dargestellten Ausführungsvarianten des Einströmbereichs des Zyklons 2 sind auch weitere Kombinationsmöglichkeiten möglich. Ziel ist eine besonders optimale Luftströmung durch die über den Umfang des Zyklon 2 gleichmäßige Einströmung des gasförmigen Mediums, wodurch eine gleichmäßige Druckverteilung und eine hohe Stabilität resultiert. Dadurch kann das Schutzglas 24 der Laseroptik 21 auch bei hohen Leistungen besonders gut vor Schweißspritzern und Schweißrauch geschützt und eine hohe Produktivität erzielt werden.

## Patentansprüche

1. Einrichtung (1) zur Erzeugung einer Luftströmung zum Schutz des Schutzglases (24) einer Laseroptik (21) eines Laser-Hybrid-Schweißkopfs (20) zur Bearbeitung eines Werkstücks (W), mit einem Zyklon (2) beinhaltend einen rotationssymmetrischen Hohlkörper (3) mit einem zylindrischen Bereich (4) mit einer Zuleitung (5) für ein gasförmiges Medium zur Erzeugung der Luftströmung, welche Zuleitung (5) mit mehreren Einlässen (6) verbunden ist, und mit einem konischen Bereich (7), der in Richtung des zu bearbeitenden Werkstücks (W) verjüngend ausgebildet ist und in einem kreisförmigen Auslass (8) mündet, **dadurch gekennzeichnet, dass** die Zuleitung (5) für das gasförmige Medium tangential in einem im Wesentlichen kreisförmigen Kanal (9) mündet und die Einlässe (6) an der Innenseite des Kanals (9) angeordnet sind.

2. Einrichtung (1) nach Anspruch 1, **dadurch gekennzeichnet, dass** der Kanal (9) im Wesentlichen konstanten Querschnitt (A_{K}) aufweist.

3. Einrichtung (1) nach Anspruch 1, **dadurch gekennzeichnet, dass** der Kanal (9) von der Mündung der Zuleitung (5) weg verjüngenden Querschnitt (A_{K}) aufweist.

4. Einrichtung (1) nach einem der Ansprüche 1 bis 3, **dadurch gekennzeichnet, dass** die Einlässe (6) in konstanten Winkelabständen (α_{E}) zueinander angeordnet sind.

5. Einrichtung (1) nach einem der Ansprüche 1 bis 3, **dadurch gekennzeichnet, dass** die Einlässe (6) von der Mündung der Zuleitung (5) weg größer werdenden Winkelabständen (α_{E}) zueinander angeordnet sind.

6. Einrichtung (1) nach einem der Ansprüche 1 bis 5, **dadurch gekennzeichnet, dass** die Einlässe (6) durch Leitschaufeln (11) voneinander getrennt sind.

7. Einrichtung (1) nach Anspruch 6, **dadurch gekennzeichnet, dass** die Leitschaufeln (11) zwischen den Einlässen (6) identisch ausgebildet sind.

8. Einrichtung (1) nach Anspruch 6, **dadurch gekennzeichnet, dass** die Leitschaufeln (11) zwischen den Einlässen (6) mit unterschiedlicher Außenkontur ausgebildet sind.

9. Einrichtung (1) nach einem der Ansprüche 6 bis 8, **dadurch gekennzeichnet, dass** die Leitschaufeln (11) eine Außenkontur in Form eines Tragflächenprofils aufweisen, und die Leitschaufeln (11) vorzugsweise gewölbt ausgebildet sind.

10. Einrichtung (1) nach einem der Ansprüche 1 bis 9, **dadurch gekennzeichnet, dass** die Einlässe (6) trichterförmig aufgeweitet ausgebildet sind.

11. Einrichtung (1) nach einem der Ansprüche 1 bis 10, **dadurch gekennzeichnet, dass** unterhalb des Auslasses (8) des rotationssymmetrischen Hohlkörpers (3) eine Querstromdüse (12) mit einer gegenüber angeordneten Absaugeinrichtung (13) angeordnet ist.

12. Einrichtung (1) nach Anspruch 11, **dadurch gekennzeichnet, dass** zwischen dem Auslass (8) des rotationssymmetrischen Hohlkörpers (3) des Zyklons (2) und der Querstromdüse (12) ein Abstand (d) zwischen 5 mm und 80 mm vorgesehen ist.

13. Einrichtung (1) nach einem der Ansprüche 1 bis 12, **dadurch gekennzeichnet, dass** am Auslass (8) des rotationssymmetrischen Hohlkörpers (3) des Zyklons (2) eine umlaufende Kante (14) vorgesehen ist, wobei die umlaufende Kante (14) vorzugsweise einen spitzen Winkel (β_{A}) kleiner 45° aufweist.

14. Einrichtung (1) nach einem der Ansprüche 1 bis 13, **dadurch gekennzeichnet, dass** der rotationssymmetrische Hohlkörper (3) zusammen mit der Zuleitung (4), dem kreisförmigen Kanal (9) und den Einlässen (6) in einem 3D-Druckverfahren hergestellt ist.

15. Laser-Hybrid-Schweißkopf (20), mit einer Laseroptik (21) mit einer Fokussierlinse (22) zum Fokussieren eines Laserstrahls (23) und einem Schutzglas (24) zum Schutz der Fokussierlinse (22) sowie mit einer Lichtbogenschweißeinheit (25) mit einem Lichtbogenschweißbrenner (26) mit einem abschmelzbaren Schweißdraht (27), **dadurch gekennzeichnet, dass** zum Schutz des Schutzglases (24) der Laseroptik (21) eine Einrichtung (1) nach einem der Ansprüche 1 bis 14 angeordnet ist.
